# EUROPEAN PATENT APPLICATION

(11) **EP 4 685 359 A1**
(43) Date of publication of application: **28.01.2026**
(21) Application number: 25190928.9
(22) Date of filing: 22.07.2025
(51) Int. Cl.: F16B 37/00, F16B 45/00

(54) **RING APPARATUS FOR PRESSURE VESSELS**

(30) Priority: 26.07.2024 US 202463675877 P
(71) Applicant: Eaton Intelligent Power Limited, D04 Y0C2 Dublin 4 (IE)
(72) Inventor: Faouzi, Halim, Dublin 4, D04 Y0C2 (IE); Latz, Ulrich, Dublin 4, D04 Y0C2 (IE)
(74) Representative: Derry, Paul Stefan

(57) **Abstract**

A ring apparatus (100) for use with a pressure vessel. The ring apparatus having a loop portion (110) that surrounds a loop axis and a base portion (120) connected to the loop portion. The base portion defines a base opening aligned along a base opening axis that is perpendicular to the loop axis. The base portion also defines a socket through which the base opening axis extends. The socket having an open side and a partially closed side. The open side faces toward an interior of the loop portion and receives a nut (200). The partially closed side having a lip on which the nut can seat. The lip defines the base opening. The base opening receives a threaded member of the pressure vessel.

## Description

### CROSS-REFERNCE TO RELATED APPLICATION

This application claims benefit to U.S Provisional Application 63/675,877, filed on July 26, 2024, the entirety of which is incorporated by reference in its entirety.

### BACKGROUND OF THE INVENTION

Ring nuts are generally used to secure objects in place. Further, ring nuts may serve as an attachment point for various applications. Often the ring nuts allows for the attachment of chains or ropes or other fasteners. As such, ring nuts need to withstand strong pulling forces.

### SUMMARY OF THE INVENTION

An aspect of the present disclosure relates to a ring apparatus for use with a pressure vessel. The ring apparatus comprises a loop portion that surrounds a loop axis and a base portion connected to the loop portion. The base portion defining a base opening aligned along a base opening axis that is perpendicular to the loop axis. The base portion also defining a socket through which the base opening axis extends. The socket has an open side and a partially closed side. The open side faces toward an interior of the loop portion and is configured to receiving a nut. The partially closed side includes a lip on which the nut can seat, and the lip defines the base opening. The base opening is configured to receive a threaded member of the pressure vessel.

Another aspect of the present disclosure relates to an assembly for use with a pressure vessel, the assembly including a nut and a ring apparatus. The ring apparatus includes a loop portion that surrounds a loop axis and a base portion connected to the loop portion. The base portion defining a base opening aligned along a base opening axis that is perpendicular to the loop axis. The base portion also defining a socket through which the base opening axis extends. The socket has an open side and a partially closed side. The open side faces toward an interior of the loop portion and is configured to receiving a nut. The partially closed side includes a lip on which the nut can seat, and the lip defines the base opening. The base opening is configured to receive a threaded member of the pressure vessel. The nut is configured to receive the threaded member to join the ring apparatus to the pressure vessel.

Another aspect of the present disclosure relates to a pressure vessel assembly comprising a pressure vessel configured to receive a ring apparatus. The pressure vessel includes a plurality of threaded members, a nut, and at least one ring apparatus. The at least one ring apparatus includes a loop portion that surrounds a loop axis and a base portion connected to the loop portion. The base portion defines a base opening aligned along a base opening axis that is perpendicular to the loop axis. The base portion also defines a socket through which the base opening axis extends. The socket having an open side and a partially closed side. The open side faces toward an interior of the loop portion and is configured for receiving the nut. The partially closed side includes a lip on which the nut can seat. The lip defines the base opening, and the base opening is configured for receiving one of the plurality of threaded members of the pressure vessel. Each threaded member of the pressure vessel is configured to extend through the base opening and fastened through the nut within the socket.

### BRIEF DESCRIPTION OF THE DRAWINGS

FIG. 1 is a top perspective view of the ring apparatus and a nut of the present disclosure;
FIG. 2 is a top perspective view of the ring apparatus of FIG. 1;
FIG. 3 is a side view of the ring apparatus of FIG. 1;
FIG. 4 is a bottom perspective view of the ring apparatus of FIG. 1;
FIG. 5 is a first cross sectional view of the ring apparatus;
FIG. 6 is a second cross sectional view of the ring apparatus;
FIG. 7 is a perspective view of a pressure vessel system of the present disclosure;
FIG. 8 is a perspective view of the pressure vessel system of FIG. 5 in an open configuration;
FIG. 9 is a perspective view of the pressure vessel system of FIG. 5 in a closed configuration.

### DETAILED DESCRIPTION

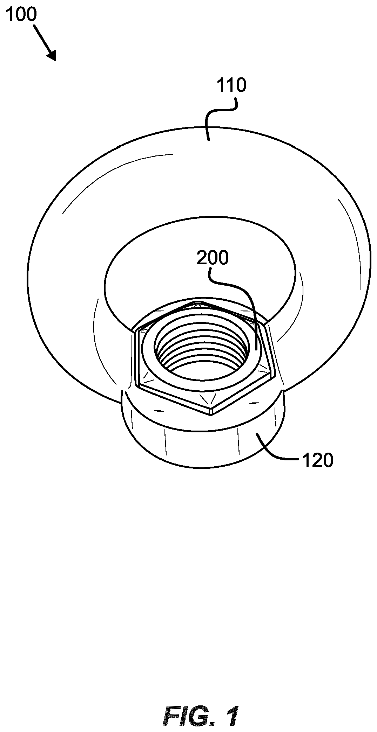

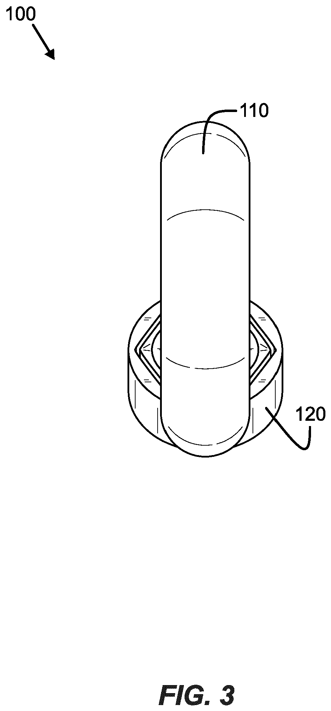

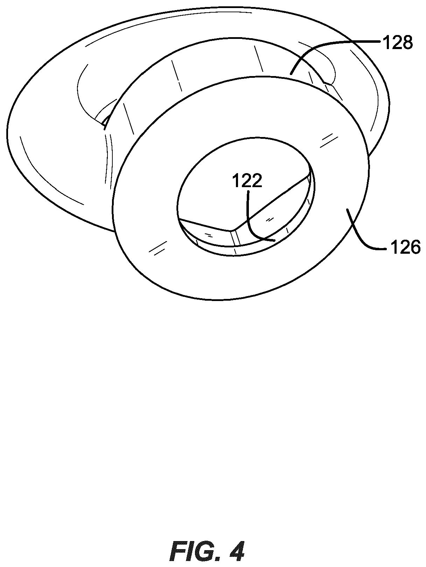

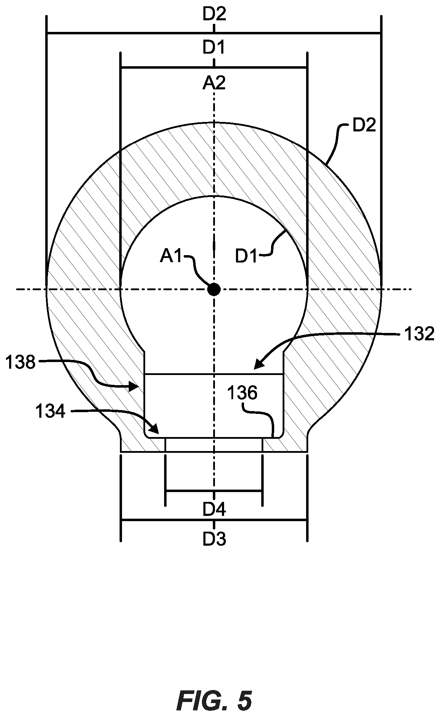

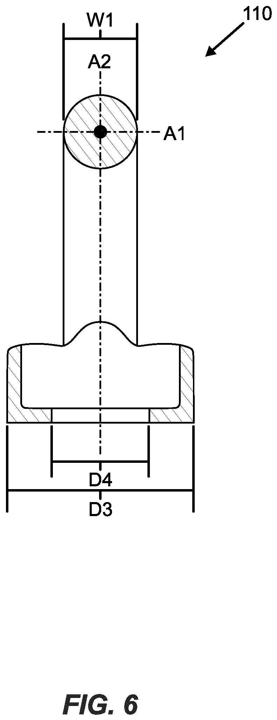

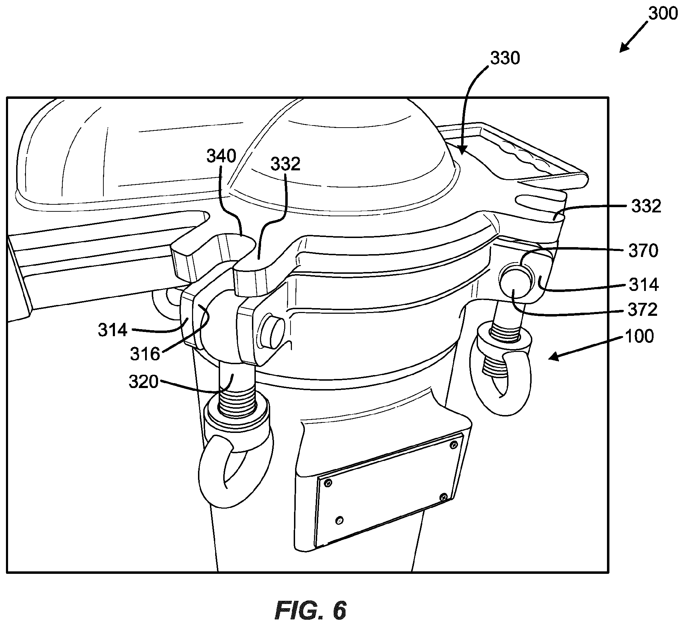

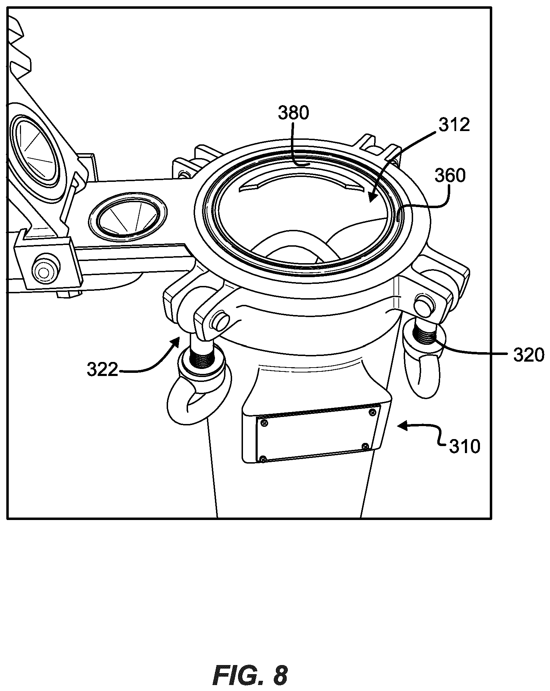

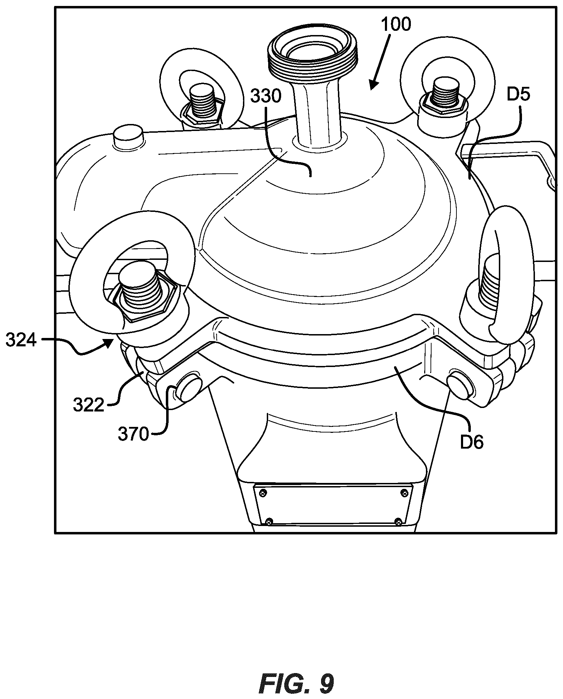

FIGS. 1-6 illustrates a ring apparatus of the present disclosure. The ring apparatus 100 is for use with a pressure vessel 300. In some examples, the pressure vessel 300 may be a filter housing. The ring apparatus includes a loop portion 110 that surrounds a loop axis A1 (shown in FIG. 5) and a base portion 120 connected to the loop portion 110. The base portion 120 defining a base opening 122 (shown in FIG. 4) aligned along a base opening axis A2 (shown in FIG. 6) that is perpendicular to the loop axis. The base opening 122 is a non-threaded to allow the insertion of a threaded member 320 (shown in FIGS. 8 and 9) through the base portion 120. The base portion 120 also defines a socket 130 through which the base opening axis A2 extends. The socket 130 has an open side 132 (shown best in Fig. 5) and a partially closed side 134 (shown best in FIG. 5). The open side 132 of the socket 130 faces toward an interior of the loop portion 110 and is configured for receiving a nut 200 (shown in FIG. 1). The partially closed side 134 of the socket 130 includes a lip 136 on which the nut 200 can seat. The lip defines the base opening 122. The base opening 122 is configured for receiving the threaded member 320 of the pressure vessel 300.

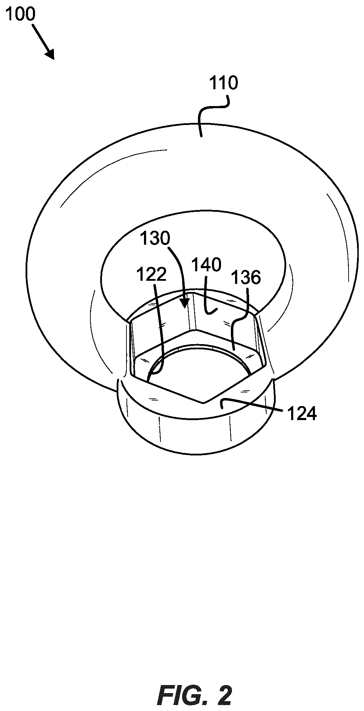

The base portion 120 includes a first side 124 (shown in FIG. 2) defining the socket 130 and a second side 126 (shown in FIG. 4) defining the base opening 122. Further, the base portion 120 is circular and has a circumference 128. The circumference of the base portion 120 tapers inward as the base portion 120 extends from the second side to the first side 124.

The loop portion 110 extends outward from the circumference of the base portion 120. The loop portion 110 includes an inner diameter D1 (shown in FIG. 5) and an outer diameter D2 (shown in FIG. 5). The outer diameter D2 of the loop portion is greater than an outer diameter D3 (shown in FIG. 6) of the base portion 120. Further, the loop portion 110 defines a width W1 extending along the loop axis A1. In the example ring apparatus 100, the width of the loop portion 110 along the loop axis is smaller than a cross dimension of the socket 130 through the base opening axis A2. In some examples, the width of the loop portion 110 is smaller than a diameter D4 (shown in FIG. 6) of the base-opening. While described as extending outward from the circumference 128 of the base portion 120, in other examples, the loop portion 110 may extend outward from the first side of the base portion 120.

The socket 130 includes a plurality of flat surfaces 140 (shown in FIG. 2) around a perimeter 138 (shown in FIG. 5) of the socket 130. The flat surfaces 140 define surfaces for retaining the nut within the socket 130 and preventing rotation of the nut 200 within the socket 130. The nut 200 may be a hexagonal nut which is fit within the socket 130. The socket 130 may be sized to allow the nut 200 to fit loosely or more tightly as desired. Further, different socket may be sized to retain a different sized nut 200. As non-limiting examples, the socket may be sized to fit all sizes of nuts. Some non-limiting examples of the nut sizes includes M16, M20, or M24. However, it is understood that the different socket sizing still prevents the nut 200 from rotating within the socket 130. Instead, as the threaded member 320 is tightened to engage the nut 200, the nut 200 is held in position within the socket 130 to move the nut 200 further along the threaded member 320. Preferably, the socket 130 is hexagonal shaped; however, the socket 130 may be other shapes to match the shape of the nut 200. In some instances, the nut 200 may be bonded to the socket 130 of the base portion 120. As non-limiting examples, the nut 200 may be bonded by spot welding or glue.

Pressure vessels may require compliance with certain standards. Additionally, threaded portions, such as a threaded portion of a nut, for fastening to the pressure vessels may also be required to meet standards. Beneficially, the nut 200 that is compliant for use with the pressure vessel may be fastened to the threaded member without the ring apparatus 100, which does not have a threaded portion, needing to be compliant. Beneficially, the nut 200 being compliant with these standards may be more readily available than the ring apparatus 100.

The ring apparatus 100 may be made from a first material different from the nut 200. The base portion 120 and the loop portion 110 are made from the same material. The nut 200 may be a hexagonal nut. The nut 200 may be a second material different from the first material of the ring apparatus. For instance, the first material may be stainless steel and the second material of the nut 200 may be a different form of stainless steel. It is understood that the first and second material may be other materials than stainless steel, including other metal materials and non-metal materials. For instance, the nut 200 may made of a first material and be configured to comply with standards for the pressure vessel and/or is certified. Examples may include the nut having a 3.1 Certification to a DIN EN 10204 standard. Additionally, the nut may comply with AD-W7-1, AD-W7-2, and PED2014/68/EU standards. For instance, the 3.1 certificate for the European standard DIN EN10204 which certifies that a metallic product is compliant with the order requirements and a supply test. By being compliant with AD-W7-1, AD-W7-2, and PED2014/68/EU, the nut is certified for use with a pressure vessel with a maximum allowable pressure greater than 0.5 bar or 7.25psig. As such, the nut 200 is in compliance with pressure vessel codes and regulations to avoid equipment failure and irreversible damage. The ring apparatus 100 may be made of a second material. Examples may include the ring apparatus having a 3.1 Certification for a DIN EN 10204 standard. As such, the nut 200 can be independently rated from the ring apparatus 100 for use with the pressure vessel.

In some examples, the loop portion 110 may be various shapes. In the present example. The loop portion 110 is circular. However, the loop portion 110 may also be other shapes with edges.

It should be understood that the ring apparatus 100 may be configured to assist in closing the pressure vessel and configured to lift or hold a weight. For instance, the ropes, chains, or other means may be inserted through the loop portions to lift or move the pressure vessel.

Referring to Fig. 7-9, the example pressure vessel 300 is a filter housing. The pressure vessel 300 includes a main body 310 with at least one threaded member 320 and a cover 330 with slots 340. The main body includes an inlet, an outlet, an opening 312 (shown in FIG. 8) covered by the cover 330, an elastomeric seal 360 surrounding the opening 312, and a plurality of threaded members 320 for closing the opening 312. The main body 310 defining a passage from the inlet to the opening 312. The main body 310 and the cover 330 defining a passage from the opening 312 to the outlet. In some instances, the main body 310 may be referred to as a canister. The pressure vessel 300 may further include a filter 380 positioned within the opening 312 of the main body 310. The cover 330 further defines pairs of flanges 332 along an outer diameter D5 (shown in FIG. 9) of the cover. Each pair of flanges 332 defines a slot 340 configured to receive the threaded members 320. Each of the slots 340 are configured to receive one of the threaded members 320. The slots 340 are defined by a space between the pair of flanges. The cover 330 closes over the opening 312. The pair of flanges 332 may be equidistantly positioned around the outer diameter D5 of the cover. A first end 322 of the thread members 320 may be connected to the main body 310 and a second end 324 positioned within the slots 340. The pressure vessel 300 is configured to be closed by at least one ring apparatus 100. The at least one ring apparatus 100 may be a plurality of ring apparatuses. Each ring apparatus 100 is configured to be fastened to the cover 330 on a different threaded member 320.

The main body 310 may further include pairs of flanges 314 configured to hold the first ends 322 of the threaded members 320. Slots 316 are defined by a space between the pair of flanges. The main body includes an outer diameter D6 (shown in FIG. 9) and the pairs of flanges 314 extend outward from the outer diameter D6. The pair of flanges 314 may be equidistantly positioned around the outer diameter D6 of the main body such that the pairs of flanges 314 of the main body 310 align with a respective one of the pairs of flanges 332 of the cover 330. The pairs of flanges 314 of the main body 310 include through-holes 370 for receiving a fastener 372 (i.e., a bolt or pin). The fastener 372 extends through an opening (not shown) in the first end of the threaded member 320. Each threaded member 320 is pivotable about the first end 322 within respective slots 316 so that the second ends 324 may be positioned within the respective aligned slots 340 of the cover 330.

Referring to FIG. 8 and 9, the pressure vessel 300 may hold the filter 380 by being placed in an open configuration and sealed in a closed configuration. The pressure vessel 300 is in the open configuration when the cover is not covering the opening. The pressure vessel 300 may be in the closed configuration when the cover is fastened by the apparatuses 100 closed. For instance, the filter 380 may be retained within pressure vessel 300 by being inserted through the opening 312. The cover 330 may be positioned over the opening 312. The second end 324 of the threaded members 320 may be pivoted to positioned between the slots 340. The plurality of ring apparatuses 100 may be tightened on the second ends 324. As each of the ring apparatuses 100 are tightened, the lip 136 functions similar to a washer and the nut 200 presses against the lip 136. The second side 126 of the base portion 120 acts as a surface to press against each flange of the respective pair of flanges 332. The tightening of the nut 200 on the lip 136 presses the second side 126 of each base portion 120 to tighten against respective pairs of flanges 332 and closes the cover 330 on the main body 310. The cover 330 closes the opening 312 and against the elastomeric seal 360. As such, the ring apparatuses 100 cooperatively work to join the cover 330 and the main body 310 together. Further the ring apparatus 100 may be used as a surface to lift or move the pressure vessel via ropes or other means. The ring apparatus 100 rated to lift 100kg.

The various embodiments described above are provided by way of illustration only and should not be construed to limit the claims attached hereto. Those skilled in the art will readily recognize various modifications and changes that may be made without following the example embodiments and applications illustrated and described herein, and without departing from the full scope of the following claims.

### ASPECTS OF THE PRESENT DISCLOSURE

Aspect 1. A ring apparatus for use with a pressure vessel, the ring apparatus comprising:
a loop portion that surrounds a loop axis;
a base portion connected to the loop portion, the base portion defining a base opening aligned along a base opening axis that is perpendicular to the loop axis, the base portion also defining a socket through which the base opening axis extends, the socket having an open side and a partially closed side, wherein the open side faces toward an interior of the loop portion and is configured for receiving a nut, wherein the partially closed side includes a lip on which the nut can seat, wherein the lip defines the base opening, and wherein the base opening is configured for receiving a threaded member of the pressure vessel.

Aspect 2. The ring apparatus of aspect 1, wherein the socket is hexagonal shaped.

Aspect 3. The ring apparatus of aspects 1 or 2, wherein the base opening is non-threaded.

Aspect 4. The ring apparatus of any one of aspects 1-3, wherein the base portion has a circumference, and wherein the loop portion extends outward from the circumference of the base portion.

Aspect 5.The ring apparatus of any one of aspects 1-4, wherein the loop portion extends outward from a first side of the base portion defining the socket.

Aspect 6. The ring apparatus of any one of aspects 1-5, wherein the lip is defined by a second side of the base portion opposite the first side.

Aspect 7. The ring apparatus of any one of aspects 1-6, wherein the loop portion includes an inner diameter and an outer diameter, and wherein the outer diameter of the loop portion is greater than an outer diameter of the base portion.

Aspect 8. The ring apparatus of any one of aspects 1-7, wherein a width of the loop portion is smaller than a diameter of the base opening.

Aspect 9. The ring apparatus of any one of aspects 1-8, wherein a width of the loop portion along the loop axis is smaller than a cross dimension of the socket through the base opening axis.

Aspect 10. The ring apparatus of any one of aspects 1-9, wherein the socket includes a plurality of flats around a perimeter of the socket.

Aspect 11. The ring apparatus of any one of aspects 1-10, wherein the socket is configured to be bonded to the nut.

Aspect 12. The ring apparatus of any one of aspects 1-11, wherein the ring apparatus is made from a first material different from a material of the nut.

Aspect 13. The ring apparatus of any one of aspects 1-12, further comprising the nut, the nut positioned within socket to receive the threaded member.

Aspect 14. The ring apparatus of any one of aspects 1-13, wherein the ring apparatus is fastened to threaded members of the pressure vessel and tightens against a cover of the pressure vessel.

Aspect 15. The ring apparatus of any one of aspects 1-14, wherein the pressure vessel is a filter housing,
wherein the filter housing comprises:
a main body with the plurality of threaded members;
the cover, the cover including slots, the slots configured to receive one of the plurality of threaded members;
a filter within the main body.

Aspect 16. An assembly for use with a pressure vessel, the assembly comprising:
a nut;
a ring apparatus, the ring apparatus comprising:
   a loop portion that surrounds a loop axis;
   a base portion connected to the loop portion, the base portion defining a base opening aligned along a base opening axis that is perpendicular to the loop axis, the base portion also defining a socket through which the base opening axis extends, the socket having an open side and a partially closed side, wherein the open side faces toward an interior of the loop portion and is configured for receiving the nut, wherein the partially closed side includes a lip on which the nut can seat, wherein the lip defines the base opening, and wherein the base opening is configured for receiving a threaded member of the pressure vessel, wherein the nut is configured to receive the threaded member to join the ring apparatus to the pressure vessel.

Aspect 17. The assembly of aspect 16, wherein the nut is made of a first material and the ring apparatus is made from a second material different from the first material.

Aspect 18. The assembly of any one of aspects 16 or 17, wherein the socket is coaxial with the base opening axis.

Aspect 19. The assembly of any one of aspects 16-18, wherein the nut is bonded to the socket.

Aspect 20. A pressure vessel assembly comprising:
a pressure vessel configured to receive a ring apparatus, the pressure vessel comprising a plurality of threaded members;
a nut;
at least one ring apparatus comprising:
   a loop portion that surrounds a loop axis;
   a base portion connected to the loop portion, the base portion defining a base opening aligned along a base opening axis that is perpendicular to the loop axis, the base portion also defining a socket through which the base opening axis extends, the socket having an open side and a partially closed side, wherein the open side faces toward an interior of the loop portion and is configured for receiving the nut, wherein the partially closed side includes a lip on which the nut can seat, wherein the lip defines the base opening, and wherein the base opening is configured for receiving one of the plurality of threaded members of the pressure vessel;
wherein each threaded member of the pressure vessel is configured to extend through the base opening and fastened through the nut within the socket.

Aspect 21. The pressure vessel assembly of aspect 20, wherein the pressure vessel is a filter housing,
wherein the filter housing comprises:
a main body with the plurality of threaded members;
a cover with slots, the slots configured to receive one of the plurality of threaded members;
a filter within the main body.

Aspect 22. The pressure vessel assembly of aspects 20 or 21, wherein the at least one ring apparatus is fastened to the cover of the filter housing on one of the plurality of threaded members.

Aspect 23. The pressure vessel assembly of any one of aspects 20-22, wherein the at least one ring apparatus is a plurality of ring apparatuses, each ring apparatus is fastened to the cover on a different threaded member of the plurality of threaded members.

Aspect 24. The pressure vessel assembly of any one of aspects 20-23, wherein the cover further defines pairs of flanges along an outer diameter of the cover, the pairs of flanges defining the slots configured to receive the plurality of threaded members.

## Claims

1. A pressure vessel assembly comprising:
a pressure vessel configured to receive a ring apparatus, the pressure vessel comprising a plurality of threaded members;
a nut;
at least one ring apparatus comprising:
a loop portion that surrounds a loop axis;
a base portion connected to the loop portion, the base portion defining a base opening aligned along a base opening axis that is perpendicular to the loop axis, the base portion also defining a socket through which the base opening axis extends, the socket having an open side and a partially closed side, wherein the open side faces toward an interior of the loop portion and is configured for receiving the nut, wherein the partially closed side includes a lip on which the nut can seat, wherein the lip defines the base opening, and wherein the base opening is configured for receiving one of the plurality of threaded members of the pressure vessel;
wherein each threaded member of the pressure vessel is configured to extend through the base opening and fastened through the nut within the socket.

2. The pressure vessel assembly of claim 1, wherein the socket is hexagonal shaped and wherein the base opening is non-threaded.

3. The pressure vessel assembly of claim 1, wherein the base portion has a circumference, and wherein the loop portion extends outward from the circumference of the base portion.

4. The pressure vessel assembly of claim 1, wherein the loop portion extends outward from a first side of the base portion defining the socket and wherein the lip is defined by a second side of the base portion opposite the first side.

5. The pressure vessel assembly of claim 1, wherein the loop portion includes an inner diameter and an outer diameter, and wherein the outer diameter of the loop portion is greater than an outer diameter of the base portion.

6. The pressure vessel assembly of claim 1, wherein a width of the loop portion is smaller than a diameter of the base opening.

7. The pressure vessel assembly of claim 1, wherein a width of the loop portion along the loop axis is smaller than a cross dimension of the socket through the base opening axis.

8. The pressure vessel assembly of claim 1, wherein the socket includes a plurality of flats around a perimeter of the socket.

9. The pressure vessel assembly of claim 1, wherein the socket of the ring apparatus is configured to be bonded to the nut.

10. The pressure vessel assembly of claim 1, wherein the ring apparatus is made from a first material different from a material of the nut.

11. The pressure vessel assembly of claim 1, wherein the socket is coaxial with the base opening axis.

12. The pressure vessel assembly of claim 1, wherein the nut is positioned within the socket to receive one of the plurality of threaded members, and wherein the ring apparatus is fastened to the threaded member of the pressure vessel received by the nut and tightens against a cover of the pressure vessel.

13. The pressure vessel assembly of claim 1, wherein the pressure vessel is a filter housing,
wherein the filter housing comprises:
a main body with the plurality of threaded members;
a cover, the cover including slots, each slot configured to receive one of the threaded members; and
a filter within the main body.

14. The pressure vessel assembly of claim 13, wherein the at least one ring apparatus is a plurality of ring apparatuses, each ring apparatus is fastened to the cover on a different threaded member of the plurality of threaded members.

15. The pressure vessel assembly of claim 14, wherein the cover further defines pairs of flanges along an outer diameter of the cover, and wherein the pairs of flanges defining the slots configured to receive the plurality of threaded members.
